# EUROPEAN PATENT APPLICATION

(11) **EP 4 796 810 A1**
(43) Date of publication of application: **26.08.2026**
(21) Application number: 24879693.0
(22) Date of filing: 15.10.2024
(51) Int. Cl.: F16H 25/24, F16H 25/22, F16J 15/06

(54) **BALL SCREW AND SEAL COMPONENT FOR BALL SCREW**

(30) Priority: 20.10.2023 JP 2023181063
(71) Applicant: NSK Ltd., Tokyo 141-8560 (JP)
(72) Inventor: NAGAI Yutaka, Fujisawa-shi, Kanagawa 251-8501 (JP)
(74) Representative: Grünecker Patent- und Rechtsanwälte PartG mbB
(86) International application number: PCT/JP2024/036617
(87) International publication number: WO 2025/084269

(57) **Abstract**

Provided are: a ball screw that is capable of improving adhesion to an outer peripheral surface of a ball screw shaft, excellent in sealability, and capable of reducing abrasion of a seal plate; and a seal member for a ball screw. This ball screw (10) comprises: a screw shaft (20) in which a spiral screw groove (21) is formed on the outer peripheral surface; a nut (30) in which a spiral screw groove (31) is formed on the inner peripheral surface; a plurality of balls (50) that roll on a load track constituted by the screw groove (21) of the screw shaft (20) and the screw groove (31) of the nut (30); and a seal member (40) that is attached to at least one end of the nut (30) in the axial direction and seals the gap between the screw shaft (20) and the nut (30). The seal member (40) has a ring-shaped seal plate (42) having an inner peripheral surface that contacts the outer peripheral surface of the screw shaft (20), and a pair of ring-shaped holding plates (41, 43) that sandwich the seal plate (42). The seal plate (42) is composed of a sponge material.

## Description

### TECHNICAL FIELD

The present invention relates to a ball screw and a seal component to be used in the ball screw.

### BACKGROUND ART

In the related art, a ball screw that converts a rotational motion into a linear motion generally includes a screw shaft having a spiral screw groove formed on an outer peripheral surface thereof and a nut having a spiral screw groove formed on an inner peripheral surface thereof, and plural balls that roll with a rotational motion of the screw shaft or the nut are loaded between the two screw grooves of the screw shaft and the nut.

Further, a seal member is usually attached to an end portion of the nut of the ball screw. The seal member has two functions, including a function of reducing grease leakage from the nut and a function of preventing foreign matter from entering the nut.

For example, Patent Literature 1 discloses a seal member including a plurality of base plates, spacer plates each sandwiched between two base plates, and seal plates each of which is disposed in a seal accommodation hole of a corresponding one of the spacer plates. Further, Patent Literature 2 proposes a seal member that is held by a cover member by combining two seal plates having the same shape and each having a hole portion having a shape corresponding to an axially perpendicular cross-sectional shape of a screw groove of a screw shaft. As these seal members, thin plate-shaped members are used for a purpose of compactly designing the nut in a longitudinal direction. As a material for each of the seal members described in Patent Literatures 1 and 2, a material formed of a synthetic resin film, a material formed of a fiber sheet impregnated with rubber or a synthetic resin, or a felt-shaped material formed of a fiber body in which resin fibers and a rubber elastic body are fused is used.

### CITATION LIST

### PATENT LITERATURE

Patent Literature 1: JP6400176B
Patent Literature 2: JP4839264B

### SUMMARY OF INVENTION

### TECHNICAL PROBLEM

However, as described in Patent Literature 1 or 2, since the seal member formed of the synthetic resin film or the seal member formed of the fiber sheet impregnated with rubber or a synthetic resin generally has poor flexibility and poor adhesion to the ball screw shaft, it is difficult to obtain excellent sealing properties by pressing the seal member against a surface of the screw shaft, and there is a concern that grease leakage or intrusion of foreign matter cannot be sufficiently reduced. Further, since being obtained by compressing hair fibers, the felt-shaped material does not have flexibility and elasticity, and it is difficult to return to an original shape when deformed, and thus there is a concern that desired sealing properties cannot be obtained.

The present invention has been made in view of the above-described problems, and an object of the present invention is to provide a ball screw and a ball screw seal member in which adhesion to an outer peripheral surface of a ball screw shaft can be improved, sealing properties are excellent, and wear of a seal plate can be reduced.

### SOLUTION TO PROBLEM

The above object of the present invention is implemented by the following configuration.
[1] A ball screw including:
   a screw shaft having a spiral screw groove formed on an outer peripheral surface thereof;
   a nut having a spiral screw groove formed on an inner peripheral surface thereof;
   a plurality of balls configured to roll on a load track formed by the screw groove of the screw shaft and the screw groove of the nut; and
   a seal member attached to at least one axial end portion of the nut and sealing a gap between the screw shaft and the nut, in which
   the seal member includes a ring-shaped seal plate having an inner peripheral surface in contact with the outer peripheral surface of the screw shaft, and a pair of ring-shaped holding plates sandwiching the seal plate, and the seal plate is made of a sponge material.

### ADVANTAGEOUS EFFECTS OF INVENTION

According to the ball screw and the ball screw seal member of the present invention, since the seal plate made of a specific material having flexibility is provided, adhesion to the outer peripheral surface of the screw shaft can be improved, leakage of lubricant from inside the nut is reduced, and entry of foreign matter from outside can be prevented. Further, since the material constituting the seal plate absorbs the lubricant, friction between the seal plate and the screw shaft can be reduced, and wear of the seal plate can be reduced.

### BRIEF DESCRIPTION OF DRAWINGS

[Fig. 1] Fig. 1 is a side view of a ball screw according to a first embodiment of the present invention.
[Fig. 2] Fig. 2 is an enlarged partial cross-sectional view showing a part of the ball screw according to the first embodiment shown in Fig. 1.
[Fig. 3] Fig. 3 is a front view showing a face plate for pressing a seal member and the seal member in the first embodiment.
[Fig. 4A] Fig. 4A is a front view showing a shape of a holding plate in the first embodiment.
[Fig. 4B] Fig. 4B is a front view showing a shape of a seal plate in the first embodiment.
[Fig. 4C] Fig. 4C is a front view showing a shape of a holding plate in the first embodiment.
[Fig. 5] Fig. 5 is an enlarged partial cross-sectional view showing a part of a ball screw according to a second embodiment of the present invention.
[Fig. 6A] Fig. 6A is a front view showing a seal member in the second embodiment.
[Fig. 6B] Fig. 6B is a diagram showing a part of a cross-section taken along a line A-A in Fig. 6A.
[Fig. 7A] Fig. 7A is a front view showing a shape of a holding plate in the second embodiment.
[Fig. 7B] Fig. 7B is a front view showing a shape of a seal plate in the second embodiment.
[Fig. 7C] Fig. 7C is a front view showing a shape of a holding plate in the second embodiment.
[Fig. 8] Fig. 8 is a schematic diagram showing an example of an ultrasonic welding device for integrating of the seal member.
[Fig. 9] Fig. 9 is a perspective view showing a method of assembling the ball screw according to the second embodiment.

### DESCRIPTION OF EMBODIMENTS

### [Ball Screw]

### (First Embodiment)

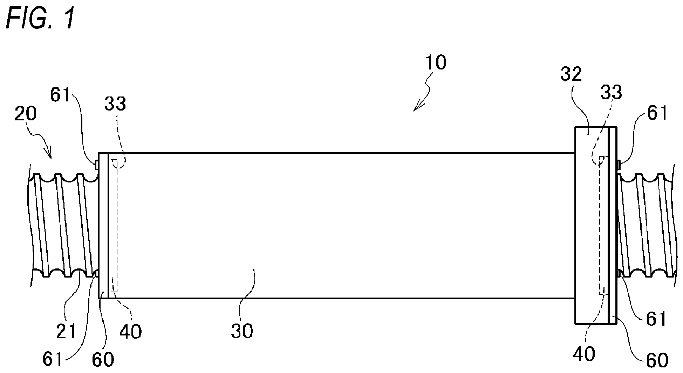

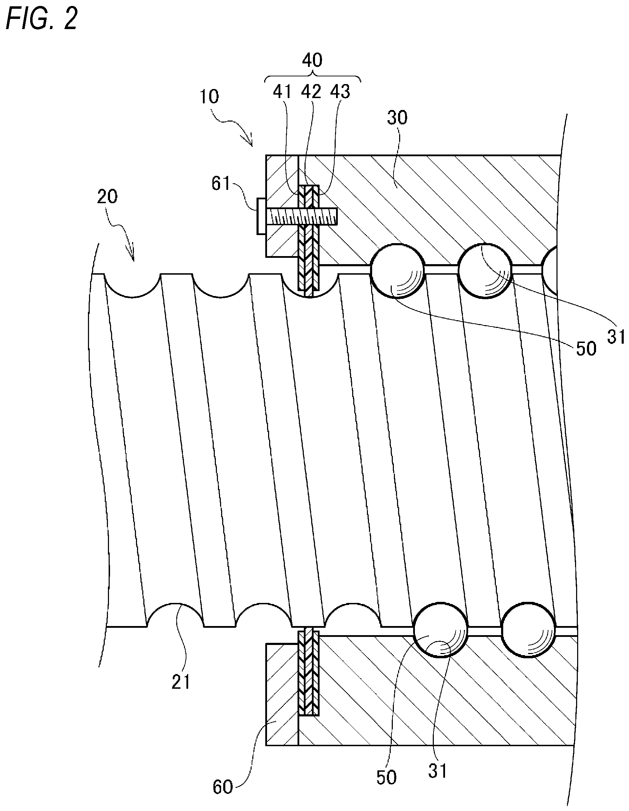

Hereinafter, a ball screw according to a first embodiment of the present invention will be described in detail with reference to the drawings. Fig. 1 is a side view of the ball screw according to the first embodiment of the present invention. Fig. 2 is an enlarged partial cross-sectional view showing a part of the ball screw according to the first embodiment shown in Fig. 1.

A ball screw 10 according to the first embodiment includes a screw shaft 20 that extends in an axial direction and has a spiral screw groove 21 on an outer peripheral surface thereof, a nut 30 that has, on an inner peripheral surface thereof, a spiral screw groove 31 corresponding to the screw groove 21 of the screw shaft 20, a plurality of balls 50 that roll on a load track formed by the screw groove 21 of the screw shaft 20 and the screw groove 31 of the nut 30, and seal members 40 which seal a gap between the screw shaft 20 and the nut 30.

Further, the nut 30 is provided with, on an outer peripheral surface thereof, a plurality of return paths (not shown) each penetrating the nut 30 such that two end portions thereof enter the load track and having a scooping portion for scooping up the balls. Accordingly, the balls scooped up at one end portion of the load track pass through the return paths and return to the other end portion of the load track, thereby implementing an endless circulation path.

In the nut 30, a flange portion 32 is formed on one axial end portion side, and circular recess portions 33, each of which has an inner diameter larger than that of a largest outer peripheral surface of the screw shaft 20, are formed on both axial end portions coaxially with the screw shaft 20. The flange portion 32 is fixed to a movable table or the like of a mechanical device, which is not shown, by attachment bolts or the like.

Each of the seal members 40 includes a ring-shaped seal plate 42 made of a sponge material and a pair of ring-shaped holding plates 41, 43 sandwiching the seal plate, and these plates are disposed on an inner peripheral surface of the circular recess portion 33 in a stacked state. A length of the circular recess portion 33 in the axial direction is designed to be shorter than a thickness of the holding plate 41, the seal plate 42, and the holding plate 43 in a stacked state, and a pressing margin of the seal member 40 is formed.

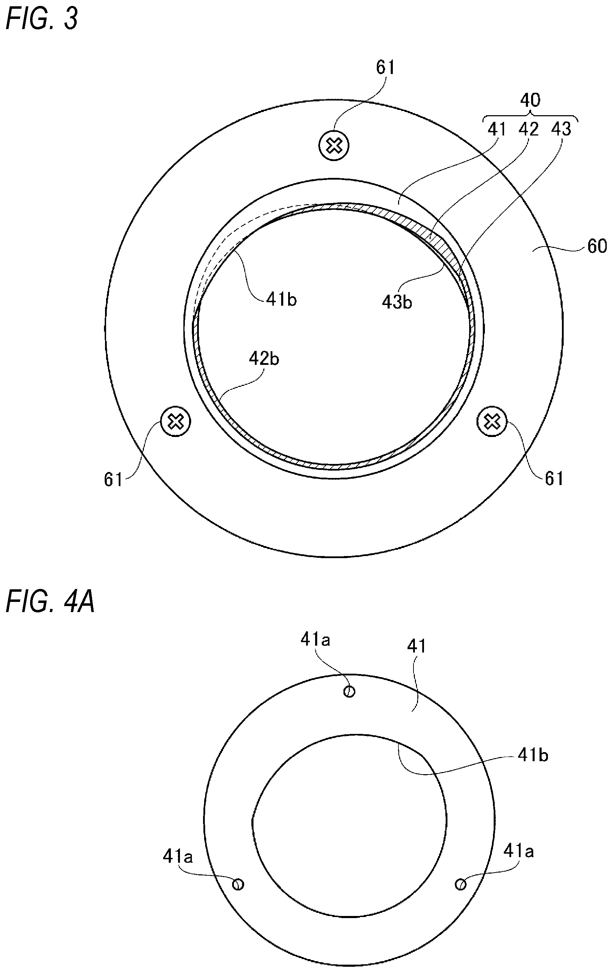

Fig. 3 is a front view showing a face plate 60 for pressing the seal member 40 and the seal member 40 in the first embodiment. As shown in Figs. 2 and 3, the face plate 60 is disposed on an axial end side of the seal member 40, and the face plate 60 is fastened to the nut 30 by fixing members 61 such as bolts or retaining rings. At this time, the seal members 40 are fixed to both axial end portions of the nut 30 in a state where each of the seal plates 42 is deformed in a thickness direction by being pressed against the face plate 60.

As a material constituting the face plate 60, the same steel material as the nut 30, a non-porous rubber harder than the seal plate 42, or the like can be appropriately selected. When the face plate 60 is formed of rubber, not only the seal member 40 but also the face plate 60 may be deformed when the face plate 60 is fixed to the nut 30.

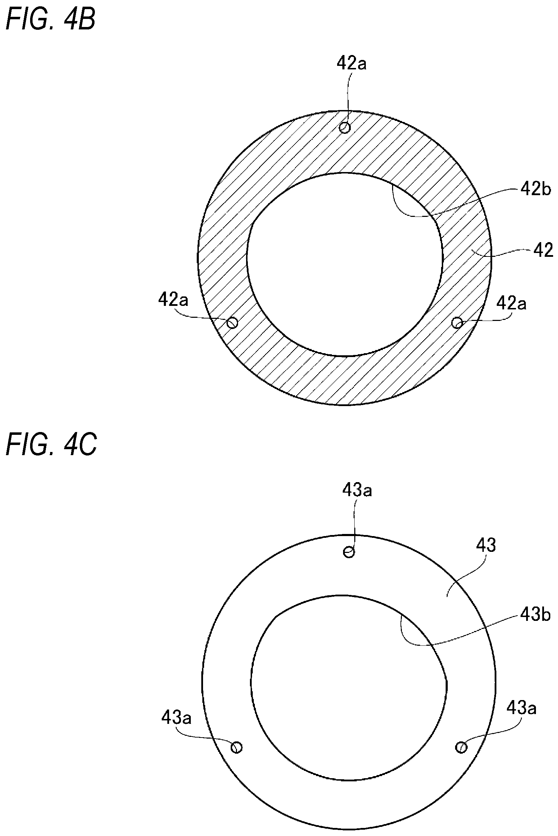

Fig. 4A is a front view showing a shape of the holding plate 41 in the first embodiment, Fig. 4B is a front view showing a shape of the seal plate 42, and Fig. 4C is a front view showing a shape of the holding plate 43.

The seal plate 42 is made of a sponge material and has, at a center thereof, a seal plate hole 42b. The seal plate hole 42b has a shape similar to a cross-sectional shape orthogonal to the axial direction of the screw shaft 20. However, since the cross-sectional shape of the screw shaft 20 varies depending on a position in the axial direction, the seal plate hole 42b corresponds to a shape of the screw shaft 20 in a phase in which the seal plate 42 is disposed. Further, a size of the seal plate hole 42b is formed to be smaller than the cross-sectional shape of the screw shaft 20 by a "tightening margin". Therefore, in a state where the screw shaft 20 is inserted into the seal plate hole 42b, an inner peripheral surface of the seal plate 42, that is, a tightening margin portion is in contact with the outer peripheral surface of the screw shaft 20.

The holding plates 41, 43 also have, at respective centers thereof, holding plate holes 41b, 43b. Each of the holding plate holes 41b, 43b also has a shape similar to the cross-sectional shape orthogonal to the axial direction of the screw shaft 20. As described above, since the cross-sectional shape of the screw shaft 20 varies depending on the position in the axial direction, the shapes of the holding plate hole 41b and the holding plate hole 43b are different from each other and correspond to the shapes of the screw shaft 20 in phases in which the holding plates 41, 43 are disposed respectively. When the holding plates 41, 43 come into contact with the outer peripheral surface of the screw shaft 20, friction occurs between the holding plates 41, 43 and the screw shaft 20, which may cause damage or deformation of the seal member 40, and sealing properties may decrease, or a performance of the ball screw 10 may decrease. In the first embodiment, since sizes of the holding plate holes 41b, 43b are slightly larger than the cross-sectional shapes of the screw shaft 20 at the respective positions, inner peripheral surfaces of the holding plates 41, 43 are not in contact with the outer peripheral surface of the screw shaft 20.

Three screw holes 41a, three screw holes 42a, and three screw holes 43a are respectively formed in the holding plate 41, the seal plate 42, and the holding plate 43, so as to be located at the same position when being stacked. Then, the fixing members 61 are inserted from a face plate 60 side and fastened to the nut 30, and thereby the holding plate 41, the seal plate 42, and the holding plate 43 are fixed at respective positions corresponding to the phases of the screw shaft 20. Accordingly, when the seal member 40 is fixed by the face plate 60, the inner peripheral surface of the seal plate 42 has a shape protruding toward the screw shaft 20, and the holding plates 41, 43 do not come into contact with the outer peripheral surface of the screw shaft 20, and only the seal plate 42 comes into contact with the screw shaft 20.

In the ball screw 10, since the screw groove 31 of the nut 30 and the screw groove 21 of the screw shaft 20 always face each other, when a relative positional relationship between the nut 30 and the seal member 40 is determined, the cross-sectional shape of the screw shaft 20 at that position is also automatically determined. In the first embodiment, the shapes of the holding plate holes 41b, 43b and the seal plate hole 42b correspond to the shapes of the cross-sectional shape of the screw shaft at the centers in a plate thickness direction of the respective components. When a deformation amount of the seal member 40 in the thickness direction at the time of fixing is large, inner peripheral surface shapes of the holding plate 41, the seal plate 42, and the holding plate 43 may be determined in consideration of a movement amount in the axial direction caused by the deformation and a change in thickness at the time of the deformation.

In the ball screw 10 configured as described above, for example, by rotating the screw shaft 20, the plurality of balls 50 roll in a circulation path including the load track and the return paths to move the nut 30 in the axial direction of the screw shaft 20. At this time, the gap between the screw shaft 20 and the nut 30 can be sealed by the seal members 40 attached to the axial end portions of the nut 30.

The seal plate 42 constituting the seal member 40 is made of a sponge material having excellent flexibility. The sponge material refers to a porous body having bubbles therein, but when only the sponge material is used, depending on hardness thereof, it may not be able to sufficiently obtain effects of preventing foreign matter from entering the nut and preventing lubricant in the nut from leaking out of the nut. In the first embodiment, since the seal plate 42 is sandwiched by the pair of holding plates 41, 43 each of which is made of a material harder than the seal plate 42, and the holding plate holes 41b, 43b each have a shape along the outer peripheral surface of the screw shaft 20, the shape of the seal plate hole 42b of the seal plate 42 can be maintained. Further, since having flexibility and appropriate elasticity as compared with a felt material, the sponge material has a strong force to return to the original shape even in a state of being pressed against the outer peripheral surface of the screw shaft 20. Therefore, the tightening margin portion of the seal plate 42 can reliably be in close contact with the outer peripheral surface of the screw shaft 20, and the sealing properties can be further improved as compared with a ball screw in the related art.

Further, as described above, since the seal plate 42 is a porous body, the seal plate 42 absorbs the lubricant on a surface of the screw groove 21, and an effect of reducing wear of the seal plate 42 can also be obtained.

In the first embodiment, the seal members 40 are attached to both end portions of the nut 30, but the present invention is not limited to such a configuration. Regarding the seal member 40, the seal member 40 may be attached to at least one axial end portion of the nut 30 as necessary.

The seal plate 42, the holding plate 41, and the holding plate 43 in the first embodiment will be described more specifically.

The seal plate 42 is preferably made of a material containing at least one selected from nitril-butadiene rubber (NBR), hydrogenated acrylonitrile-butadiene rubber (HNBR), ethylene-propylene rubber (EPM), ethylene propylene diene methylene linkage (EPDM), vinyl methyl silicone rubber (VMQ), acrylic rubber (ACM), and fluororubber (FKM).

Among the rubber-based materials, the HNBR, the EPM, and the EPDM have excellent heat resistance, and the VMQ, the ACM, and the FKM have excellent heat resistance and chemical resistance. As the material of the seal plate 42, in addition to the rubber-based material, a material containing at least one selected from a resin and an elastomer can also be used. Therefore, the material constituting the seal plate 42 can be appropriately selected according to use environment and an application.

Further, the hardness of the sponge material constituting the seal plate 42 is preferably 10 or more and 50 or less as an Asker C-based measurement value. A range of the preferable hardness in the first embodiment is an extremely soft value as compared with a non-porous rubber material. If a non-porous rubber is molded to have a hardness within the above range, oil resistance may decrease due to an influence of additives and the like. In the first embodiment, the sponge material is selected as the material of the seal plate 42 because of having excellent sealing properties and high flexibility.

That is, in the first embodiment, since the seal plate 42 made of the sponge material is used, even if the Asker C-based measurement value is in a soft range of 10 or more, the oil resistance is high, the desired adhesion between the seal plate 42 and the screw shaft 20 can be obtained, and the sealing properties can be further improved. Further, when the hardness of the sponge material is 50 or less as the Asker C-based measurement value, appropriate flexibility is obtained, and the sealing properties can be further improved.

In the first embodiment, a density of the sponge material and a state of bubbles are not particularly limited. For example, as for internal bubbles, there are a closed-cell type in which bubbles are not connected in the inside and an open-cell type in which the bubbles are connected in the inside, but it is considered that the closed-cell type has less risk of lubricant leakage or seal member damage as compared with the open-cell type. Therefore, in the first embodiment, it is preferable to use a closed-cell type sponge material as the sponge material constituting the seal plate 42.

Examples of a method of manufacturing the seal plate 42 include a method of punching a sponge material with a die and a method of cutting out the sponge material with a small blade or laser processing.

A metal plate can be used as the materials of the holding plates 41, 43. Further, a plate made of a resin material may be used as long as the plate has enough hardness to maintain the shape of the seal plate 42.

### (Second Embodiment)

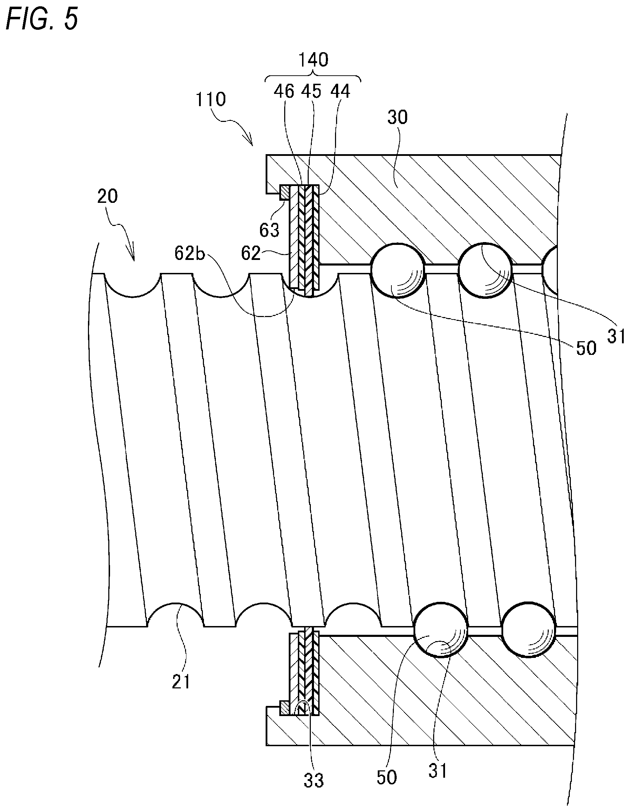

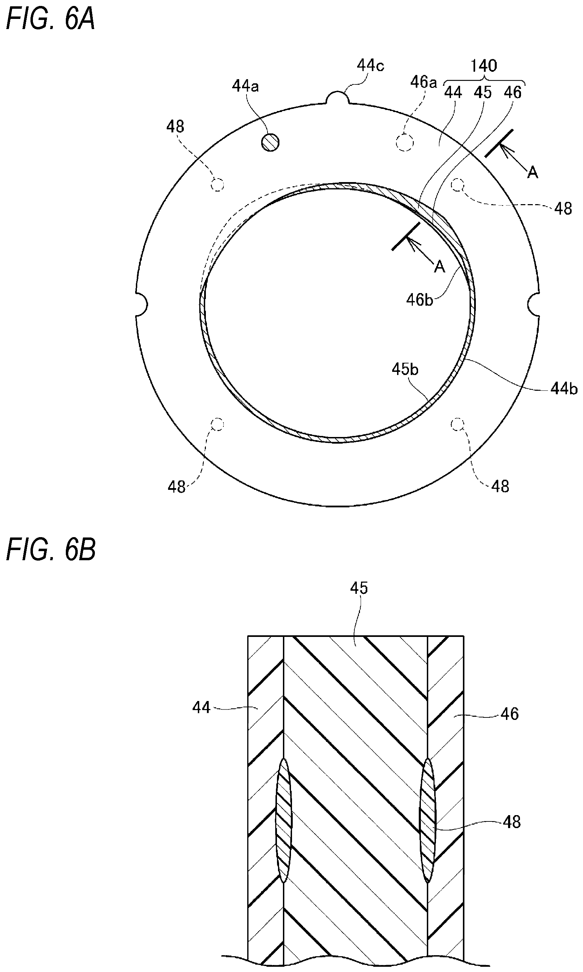

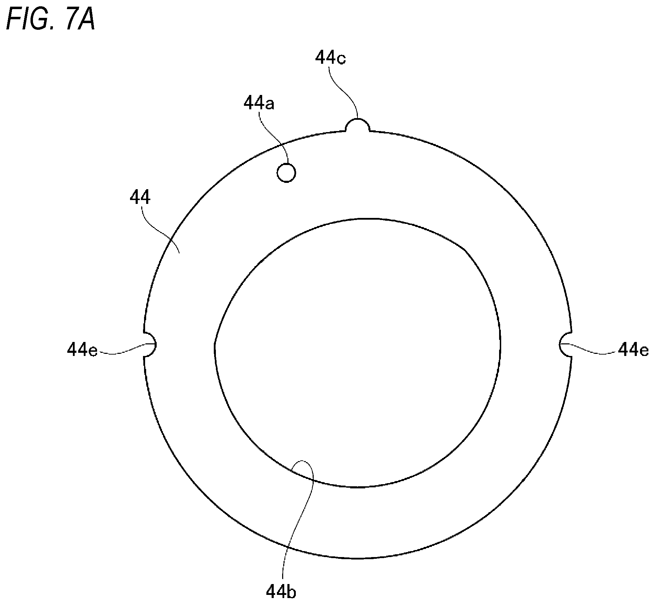

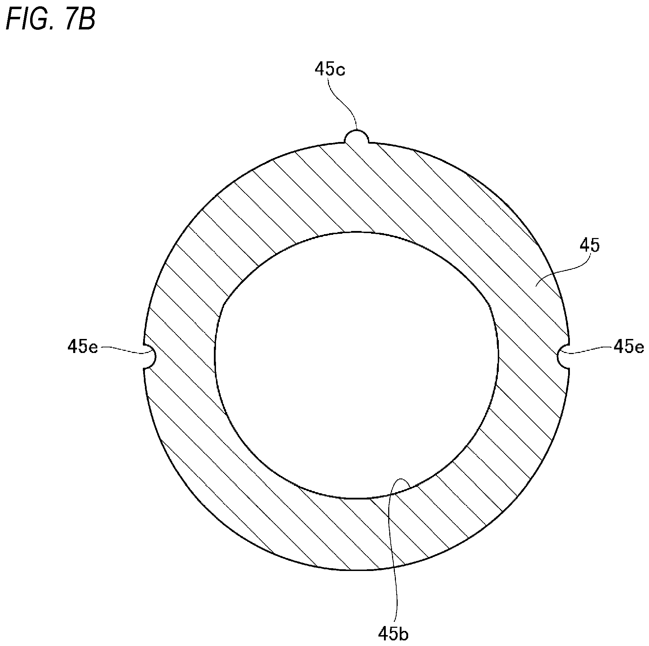

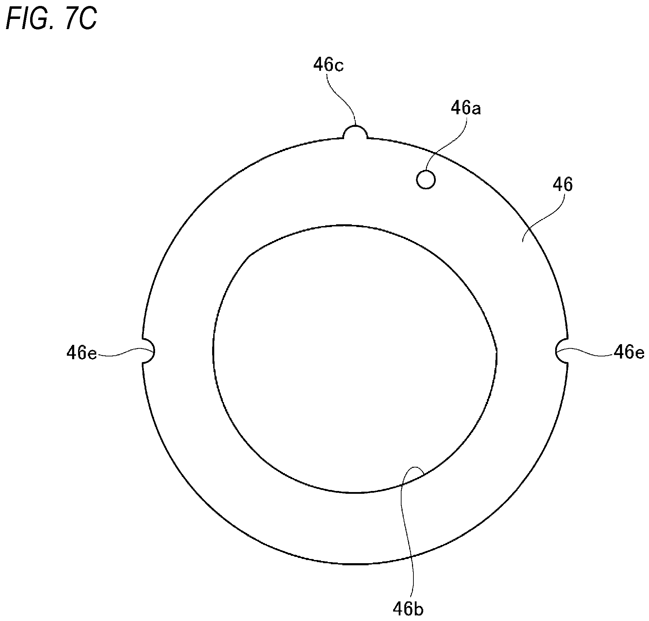

Next, a ball screw according to a second embodiment of the present invention will be described in detail with reference to the drawings. Fig. 5 is an enlarged partial cross-sectional view showing a part of the ball screw according to the second embodiment of the present invention. Fig. 6A is a front view showing a seal member 140 in the second embodiment, and Fig. 6B is a view showing a part of a cross-section taken along a line A-A in Fig. 6A. Fig. 7A is a front view showing a shape of a holding plate 44 in the second embodiment, Fig. 7B is a front view showing a shape of a seal plate 45 in the second embodiment, and Fig. 7C is a front view showing a shape of a holding plate 46 in the second embodiment. In the ball screw according to the second embodiment, the same components as those in the first embodiment are denoted by the same reference numerals, and detailed description thereof will be omitted or simplified.

Similar to the first embodiment, a ball screw 110 according to the second embodiment includes the seal member 140 that seals the gap between the screw shaft 20 and the nut 30, and the seal member 140 is disposed on the inner peripheral surface of each of the circular recess portions 33 of the nut 30. Further, a face plate 62 is disposed on an axial end side of the seal member 140, and a metal retaining ring 63 is further disposed on an axial end side of the face plate 62. The face plate 62 is made of metal, for example, and is disposed to maintain a shape of the seal member 140. A size of a face plate hole 62b provided in the face plate 62 is formed to be slightly larger than a cross-sectional shape of the screw shaft 20 at a position where the face plate 62 is disposed. The retaining ring 63 has a ring shape with an opening portion. The seal member 140 and the face plate 62 are fitted to an inner peripheral surface of the circular recess portion 33 in a state of being disposed on the inner peripheral surface of the circular recess portion 33, and thereby the seal member 140 is fixed to the nut 30 in a pressed state. The retaining ring 63 is not particularly limited as long as having a C shape, and a concentric retaining ring, a C-shaped retaining ring for a shaft, or the like can be used. In particular, it is preferable to use the concentric retaining ring because of low cost, appropriate spring properties, and good workability.

As shown in Figs. 5, 6A, 6B, and 7A to 7C, the seal member 140 includes a seal plate 45 and a pair of ring-shaped holding plates 44, 46 that sandwich the seal plate 45. Similar to the first embodiment, the seal plate 45 is provided with a seal plate hole 45b, and the holding plates 44, 46 are also respectively provided with holding plate holes 44b, 46b each corresponding to a shape of the screw shaft 20. Further, the seal plate 45 and the holding plates 44, 46 are provided with projection portions 45c, 44c, and 46c, respectively, which serve as alignment when these three plates are stacked. Further, recess portions 44e, recess portions 45e, and recess portions 46e are provided on both sides forming 90° with respect to the projection portions 45c, 44c, and 46c, respectively. Furthermore, the holding plates 44, 46 are provided respectively with mark holes 44a, 46a at positions shifted from the projection portions 44c, 46c.

In the second embodiment, the seal plate 45 and the holding plates 44, 46 are joined and integrated in advance by ultrasonic welding. Specifically, as shown in Figs. 6A and 6B, welded portions 48 are formed at four locations in a circumferential direction of the seal member 140 at an interface between the seal plate 45 and the holding plate 44 and an interface between the seal plate 45 and the holding plate 46.

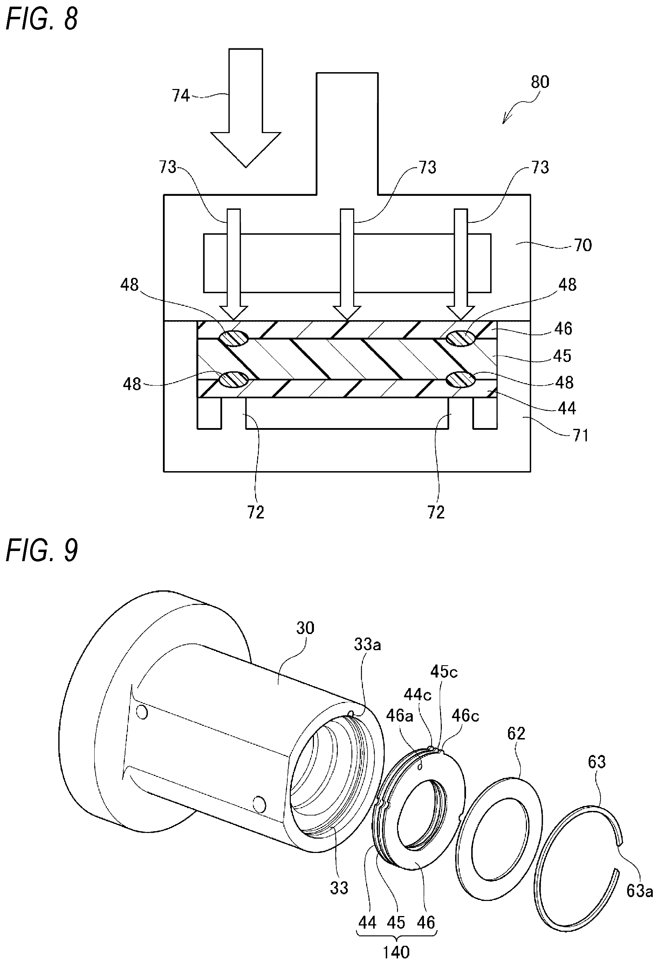

Here, a method of manufacturing the ball screw according to the second embodiment will be briefly described with reference to the drawings. Fig. 8 is a schematic diagram showing an example of an ultrasonic welding device for the integrating of the seal member. Fig. 9 is a perspective view showing a method of assembling the ball screw according to the second embodiment. As shown in Fig. 8, a lower electrode 71 of the ultrasonic welding device 80 is provided with a plurality of pins 72 protruding upward, and the holding plate 44, the seal plate 45, and the holding plate 46 are placed on the pins 72 in this order. As described above, the seal plate hole 45b and the holding plate holes 44b, 46b are formed to correspond to the shape of the screw shaft 20 in the phase in which the seal member 140 is disposed. However, the holding plate 44 and the holding plate 46 have the holding plate holes 44b, 46b having the same shape, and can be made to correspond to the shape of the screw shaft 20 by reversing the holding plate 46. Therefore, when the holding plate 44, the seal plate 45, and the holding plate 46 are stacked, positions of the projection portions 45c, 44c, and 46c and the recess portions 44e, 45e, and 46e are aligned, and the mark hole 44a and the mark hole 46a are not to overlap each other.

Thereafter, a horn 70 is pressed from above in a direction of an arrow 74, and ultrasonic waves 73 are oscillated by the horn 70 in a state where a position corresponding to each of the pins 72 is pressurized. Accordingly, the welded portions 48 are formed at the interface between the seal plate 45 and the holding plate 44 and the interface between the seal plate 45 and the holding plate 46 in the pressurized regions, and these plates are integrated.

Next, as shown in Fig. 9, the seal member 140 and the face plate 62 are inserted in this order into the circular recess portion 33 formed in the inner peripheral surface of the nut 30. The circular recess portion 33 is provided with a recess 33a, and when the seal member 140 is inserted, an insertion position can be determined by aligning the projection portions 44c, 45c, and 46c with the recess 33a. Thereafter, by inserting and fitting an opening portion 63a of the retaining ring 63 into the circular recess portion 33 while narrowing the opening portion 63a, the seal member 140 can be fixed to the inner peripheral surface of the nut 30.

In the ball screw 110 configured as described above, similarly to the first embodiment, the gap between the screw shaft 20 and the nut 30 can also be sealed by the seal members 140 attached to the axial end portions of the nut 30. Further, since the sponge material is used as a material of the seal plate 45, a tightening margin portion of the seal plate 45 can reliably be in close contact with the outer peripheral surface of the screw shaft 20, and excellent sealing properties and wear resistance can be obtained.

In the ball screw 110 according to the second embodiment, the seal plate 45 and the holding plates 44, 46 are joined and integrated in advance. Therefore, the insertion of the seal member 140 into the nut 30 can be significantly simplified as compared with a case where the holding plate 44, the seal plate 45, and the holding plate 46 are separated one by one. Further, when assembling the ball screw 110, the screw shaft 20 is inserted into the nut 30 while rotating the nut 30 or the screw shaft 20, but the seal member 140 is integrated, so that occurrence of misalignment between the seal plate 45 and the holding plates 44, 46 can be prevented.

In the second embodiment, as a method of joining and integrating the holding plate 44, the seal plate 45, and the holding plate 46, joining by ultrasonic welding is used, but the present invention is not limited to the joining method. Various joining methods such as welding by heat or the like, adhesion using an adhesive or the like, fastening using a fastening member such as a screw or a thread, adhesion using an adhesive tape or the like can be adopted, and a structure of a joining portion conforms to these methods.

When the holding plate 44, the seal plate 45, and the holding plate 46 are joined and integrated, the same materials as those in the first embodiment can be used as the materials constituting the seal plate 45 and the holding plates 44, 46. However, it is preferable that each of the holding plates 44, 46 is made of a thermoplastic resin and the seal plate 45 is made of a thermosetting resin. In general, it is known that ultrasonic welding is easy between the same type of resin materials, but the inventors of the present application have found that ultrasonic welding is suitable for joining the holding plates 44, 46 made of a thermoplastic resin and the seal plate 45 made of a thermosetting resin.

In a case where the holding plates 44, 46 and the seal plate 45 are made of the above-described materials, when these plates are joined by ultrasonic welding, the holding plate material melted by ultrasonic waves enters the sponge-shaped seal plate 45, and thus high joining ability is obtained. Further, as shown in Fig. 8, since the joining can be easily performed using an ultrasonic welding device, manufacturing efficiency can be improved. Regardless of the joining method, when the holding plates 44, 46 and the seal plate 45 are joined in a dot shape in at least two regions, the elasticity of the seal plate can be maintained better than in a case of joining in a planar shape.

As the material constituting the seal plate 45, a material similar to that in the first embodiment can be used, and in particular, it is preferable to use the nitril-butadiene rubber (NBR). At this time, as the material constituting each of the holding plates 44, 46, it is preferable to use a material having excellent oil resistance and heat resistance and excellent mechanical strength. Specifically, as the material constituting each of the holding plates 44, 46, it is preferable to use polyoxymethylene resin (POM) or poly butylene terephthalate (PBT), and it is more preferable to use the POM.

The hardness, density, and state of bubbles of the sponge material constituting the seal plate 45 are similar to those in the first embodiment.

### [Ball Screw Seal Member]

The ball screw seal members 40 and 140 according to the first embodiment and second embodiment are used in the ball screws 10 and 110 according to the first embodiment and second embodiment. Details of each seal member are as described above.

The present invention is not limited to the above-described embodiments, and can be appropriately modified, improved, or the like.

As described above, the following matters are disclosed in the present specification.
(1) A ball screw including:
   a screw shaft having a spiral screw groove formed on an outer peripheral surface thereof;
   a nut having a spiral screw groove formed on an inner peripheral surface thereof;
   a plurality of balls configured to roll on a load track formed by the screw groove of the screw shaft and the screw groove of the nut; and
   a seal member attached to at least one axial end portion of the nut and sealing a gap between the screw shaft and the nut, in which
   the seal member includes a ring-shaped seal plate having an inner peripheral surface in contact with the outer peripheral surface of the screw shaft, and a pair of ring-shaped holding plates sandwiching the seal plate, and the seal plate is made of a sponge material.
   According to the configuration, since a shape of the seal plate can be maintained and the inner peripheral surface of the seal plate can reliably be in close contact with the outer peripheral surface of the screw shaft, leakage of lubricant from inside the nut can be reduced, entry of foreign matter from outside can be prevented, and a ball screw having excellent sealing properties can be obtained. Further, since the seal plate absorbs the lubricant on a surface of the screw groove, a ball screw in which wear of the seal plate is reduced can be obtained.
(2) The ball screw according to (1), in which
   the seal plate is made of a material containing at least one selected from nitril-butadiene rubber, hydrogenated acrylonitrile-butadiene rubber, ethylene-propylene rubber, ethylene propylene diene methylene linkage, vinyl methyl silicone rubber, acrylic rubber, and fluororubber.
   According to the configuration, since the seal plate is made of a material having excellent heat resistance and chemical resistance, durability is excellent, and the sealing properties provided by the seal member can be further improved.
(3) The ball screw according to (1), in which
   the seal plate is made of a material containing at least one selected from a resin and an elastomer.
   According to the configuration, since the seal plate is made of a material having excellent heat resistance and chemical resistance, the durability is excellent, and the sealing properties provided by the seal member can be further improved.
(4) The ball screw according to any one of (1) to (3), in which
   the seal plate and the pair of ring-shaped holding plates sandwiching the seal plate are joined and integrated.
   According to the configuration, insertion of the seal member into the nut can be simplified, and occurrence of misalignment between the seal plate and the holding plates can be prevented when assembling the screw shaft into the nut.
(5) The ball screw according to (4), in which
   each of the holding plates is made of a thermoplastic resin, and the seal plate is made of a thermosetting resin.
   According to the configuration, performances required for the holding plates and the seal plate can be obtained.
(6) The ball screw according to (5), in which
   the seal plate and the holding plates are joined by ultrasonic welding.
   According to the configuration, the holding plates and the seal plate can be easily joined with high strength without impairing respective functions, and manufacturing efficiency of the seal member can be improved.
(7) The ball screw according to any one of (1) to (6), in which
   hardness of the seal plate is 10 or more and 50 or less as an Asker C-based measurement value.
   According to the configuration, since oil resistance is high, appropriate flexibility is obtained, and desired adhesion between the seal plate and the screw shaft can be obtained, the sealing properties can be further improved.
(8) A ball screw seal member to be used in the ball screw according to any one of (1) to (7).

According to the configuration, since the shape of the seal plate can be maintained and an inner peripheral surface of the seal plate can reliably be in close contact with the outer peripheral surface of the screw shaft, excellent sealing properties can be obtained, and wear of the seal plate can be reduced.

Although the embodiments and the variations thereof are described above with reference to the drawings, it is needless to mention that the present invention is not limited to these examples. It is apparent for those skilled in the art to which the present disclosure belongs that various modified examples or corrected examples are conceivable within the scope recited in the claims, and it is understood that the above falls within the technical scope of the present invention. In addition, the components described in the above embodiments may be combined in any manner without departing from the spirit of the invention.

The present application is based on a Japanese patent application (No. 2023-181063) filed on October 20, 2023, the contents of which are incorporated herein by reference.

### REFERENCE SIGNS LIST

10, 110 ball screw
20 screw shaft
21, 31 screw groove
30 nut
33 circular recess portion
40, 140 seal member
41, 43, 44, 46 holding plate
41b, 43b, 44b, 46b holding plate hole
42, 45 seal plate
42b, 45b seal plate hole
48 welded portion
50 ball
60, 62 face plate
61 fixing member
63 retaining ring
70 horn
73 ultrasonic waves

## Claims

1. A ball screw comprising:
a screw shaft having a spiral screw groove formed on an outer peripheral surface thereof;
a nut having a spiral screw groove formed on an inner peripheral surface thereof;
a plurality of balls configured to roll on a load track formed by the screw groove of the screw shaft and the screw groove of the nut; and
a seal member attached to at least one axial end portion of the nut and sealing a gap between the screw shaft and the nut, wherein
the seal member includes a ring-shaped seal plate having an inner peripheral surface in contact with the outer peripheral surface of the screw shaft, and a pair of ring-shaped holding plates sandwiching the seal plate, and the seal plate is made of a sponge material.

2. The ball screw according to claim 1, wherein
the seal plate is made of a material containing at least one selected from nitril-butadiene rubber, hydrogenated acrylonitrile-butadiene rubber, ethylene-propylene rubber, ethylene propylene diene methylene linkage, vinyl methyl silicone rubber, acrylic rubber, and fluororubber.

3. The ball screw according to claim 1, wherein
the seal plate is made of a material containing at least one selected from a resin and an elastomer.

4. The ball screw according to claim 1, wherein
the seal plate and the pair of ring-shaped holding plates sandwiching the seal plate are joined and integrated.

5. The ball screw according to claim 4, wherein
each of the holding plates is made of a thermoplastic resin, and the seal plate is made of a thermosetting resin.

6. The ball screw according to claim 5, wherein
the seal plate and the holding plates are joined by ultrasonic welding.

7. The ball screw according to any one of claims 1 to 6, wherein
hardness of the seal plate is 10 or more and 50 or less as an Asker C-based measurement value.

8. A ball screw seal member to be used in the ball screw according to any one of claims 1 to 6.

9. A ball screw seal member to be used in the ball screw according to claim 7.
